# EUROPÄISCHE PATENTANMELDUNG

(11) **EP 1 074 478 A1**
(43) Veröffentlichungstag der Anmeldung: **07.02.2001**
(21) Anmeldenummer: 00116655.2
(22) Anmeldetag: 02.08.2000
(51) Int. Cl.: B65D 43/02

(54) **Verschlussdeckel für ein Getränkeglas**

(30) Priorität: 05.08.1999 DE 19936977
(71) Anmelder: Siegmann, Götz, 88085 Langenargen (DE)
(72) Erfinder: Siegmann, Götz, 88085 Langenargen (DE)
(74) Vertreter: Riebling, Peter, Dr.-Ing.

(57) **Zusammenfassung**

Ein wiederverschließbarer Verschlußdeckel (10) für ein Getränkeglas (1) ist als Spring- oder Federdeckel mit Übertotpunkt-Charakteristik ausgebildet. Er weist seitliche Arretieransätze (13) auf, die sich an einem seitlichen Wulst (5) des Getränkeglases (1) kraftschlüssig anlegen. Wird der Verschluß (10) durch Überwindung seiner Federkraft in seine Öffnungsstellung gebracht, dann heben die Arretieransätze (13) von dem umlaufenden Wulst (5) des Getränkeglases (1) ab und der Verschlußdeckel (10) kann vom Getränkeglas (1) abgenommen werden. Er ist für den Verschluß (10) von Getränkegläsern (1) bestimmt, die mit kohlensäurehaltigen Flüssigkeiten (Bier, Wein, Fruchtsäften und dergleichen) gefüllt sind.

## Beschreibung

Die Erfindung betrifft einen Verschlußdeckel für ein Getränkeglas nach dem Oberbegriff des Patentanspruches 1.

Ein derartiger Verschlußdeckel ist z. B. ein derartiger Gegenstand in der DE-297 19 184 U1 oder der DE-GM 93 09 686.0 bekannt geworden. Bei einem Deckel nach der DE 297 19 184 U1 besteht aber der Nachteil, daß er nur schwierig wieder zu verschließen ist und im wiederverschlossenen Zustand nur eine geringe Druckdichtheit aufweist.

Ein derartiger Deckel ist deshalb nicht geeignet, als wiederverwendbarer Deckel für Getränkegläser verwendet zu werden, welche mit einem kohlensäurehaltigen Erfrischungsgetränk gefüllt sind.

Der Erfindung liegt deshalb die Aufgabe zugrunde, einen wiederverschließbaren Verschlußdeckel für ein Getränkeglas der Eingangs genannten Art so weiter zu bilden, daß er wie ein leicht zu öffnender und schließender Verschlußdeckel wirkt, kostengünstig herstellbar ist und einen einwandfreien Wiederverschluß des Getränkeglases nach erstmaliger Öffnung gewährleistet.

Zur Lösung der gestellten Aufgabe ist die Erfindung durch die technische Lehre des Anspruches 1 gekennzeichnet.

Wesentliches Merkmal der Erfindung ist, daß der Verschlußdeckel nun als Springdeckel oder Federdeckel ausgebildet ist. Technisch gesehen handelt es sich um einen Übertotpunkt-Deckel, der Übertotpunkt-Federungseigenschaften hat. Eine derartige Übertotpunkt-Federungseigenschaft bezieht sich darauf, daß aufgrund elastischer Spannungen in dem Deckel, er in einen ersten Zustand (z. B. in einen Verschlußzustand) gebracht werden kann, und daß beim Überwinden einer bestimmten Übertot-Spannung er federnd in einen zweiten Verschlußzustand springt, z. B. in den Öffnungszustand.

Konstruktiv wird dies dadurch erreicht, daß der Deckel in seinem mittleren Deckelbereich eine Federungscharakteristik aufweist, und daß an dem Deckel gleichmäßig angeordnete Haltearme angeordnet sind, an deren äußeren freien Enden jeweils Arretieransätze angeordnet sind. Diese Arretieransätze sind geeignet, einen Wulst am Getränkeglas zu untergreifen, und sich an diesem kraftschlüssig anzulegen.

Es wird also vorausgesetzt, daß das Getränkeglas mindestens einen Wulst aufweist, wobei auch mehrere Wulste vorhanden sein können, weil es ja nicht lösungsnotwendig ist, daß die Arretieransätze der Haltearme an ein und den selben Wulst angreifen. Es können also auch mehrere Wulste auf unterschiedlichen Ebenen am Getränkeglas angeordnet sein und die Haltearme mit den daran befestigten Arretieransätzen sind so ausgebildet, daß sie jeweils den dortigen Wulst untergreifen und sich dort kraftschlüssig anlegen.

Im übrigen muß der Wulst auch nicht umlaufen. Es reicht aus, wenn er teilweise umläuft. Er kann also auch entsprechende Unterbrechungen aufweisen und nur an den Stellen vorhanden sein, wo das Untergreifen der Arretieransätze notwendig ist, um die Verschlußfunktion des Deckels zu gewährleisten.

Durch die Tatsache, daß der Verschlußdeckel erfindungsgemäß eine Übertotpunkt-Charakteristik hat, wird erreicht, daß durch Aufwölbung des Verschlußdeckels dieser seine Haltekraft an dem umlaufenden Wulsten des Getränkeglases verstärkt, so daß die Dichtwirkung um so besser wird, je höher die Kraft von dem kohlensäurehaltigen Getränk im Inneren des Luftraumes unterhalb des Deckels ist, welcher auf den Deckel wirkt. Diese Kraft neigt also, den Deckel konvex nach außen zu wölben, wodurch die Haltekraft der Arretieransätze an dem umlaufenden Wulst des Getränkeglases verstärkt wird. Es ist bekannt, daß bei kohlesäurehaltigen Getränken, eine gewisse Druckbegrenzung vorhanden sein muß, um das Getränkeglas selbst vor einem Zerspringen durch Überdruck des Getränkes zu bewahren. Hierbei ist es vorgesehen, daß ab einem Druck von etwa 2 bar im Innenraum des Getränkeglases ein Abblasen dieses Überdruckes über die Dichtflächen erfolgt.

Wächst nämlich der Überdruck im Innenraum so stark an, daß der Deckel so stark hochgewölbt wird, daß er seine Dichtwirkung mit den Dichtflächen am Getränkeglas verliert, dann erfolgt ein Abblasen über die sich öffnenden Dichtflächen zwischen Verschlußdeckel und Getränkeglas und der Überdruck wird damit abgeblasen, bis er unter einen Wert von 2 bar kommt. Das Abblasen bei Überdruck ist also ein erwünschter Effekt, der sich mit den Mitteln der Erfindung sozusagen mit ergibt.

Auf diese Weise wird stets sichergestellt, daß in dem Getränkeglas kein unzulässig hoher Druck entsteht, der die Gefahr des Berstens des Getränkeglases in sich birgt.

Der Begriff 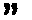 Getränkeglas" ist im übrigen weit zu verstehen. Hierunter fallen nicht nur Glasgefäße mit rundem Querschnitt. Es können auch in gewisser Weise ovale oder kantige Gefäße verwendet werden, bei denen ebenfalls sichergestellt werden muß, daß der hierfür verwendete oval oder mehrkantig ausgebildete Verschlußdeckel seine Übertotpunkt-Federungscharakteristik entfalten kann. Statt der Verwendung eines Glaskörpers können auch andere beliebige Behälter verwendet werden. wie z. B. Kunststoffe, Keramikkörper, Steingutkörper, Metallgefäße, insbesondere Blechgefäße und dgl. mehr.

Wichtig ist jedoch, daß der erfindungsgemäße Verschlußdeckel insbesondere seine Vorteile mit Getränkegläsern entfaltet wird, die mit kohlesäurehaltigen Erfrischungsgetränken gefüllt sind, wie zum Beispiel Bier, Limonade, Fruchtsäften, Weinen und dgl. mehr.

Das Öffnen des wiederverschließbaren Verschlußdeckels erfolgt einfach dadurch, indem von der Oberseite her auf den gewölbten Verschlußdeckel ein Druck ausgeübt wird, so lange bis dieser unter Überwindung seiner Übertotpunkt-Charakteristik in seinen anderen Zustand springt, nämlich seinen Öffnungszustand. In seinem Öffnungszustand ist mindestens der Deckelboden konkav nach innen gewölbt, während sich nach außen hin in Richtung zum Deckelrand konvexe Wölbungen anschließen.

Dieses konkave Abbiegen des Deckelboden führt dazu, daß die an den seitlichen Wulsten untergreifenden Haltearme von den Wulsten sich abheben, so daß die Arretieransätze an den Haltearmen außer Eingriff mit dem umlaufenden Wulst am Getränkeglas kommen.

Damit ist der Öffnungszustand erreicht und der Verschlußdeckel kann einfach nach oben hin abgenommen werden.

Soll das Getränkeglas wieder verschlossen werden, dann reicht es aus, auf die Haltearme etwa in horizontaler Ebene einen gegeneinander gerichteten Druck (z. B. mit den gegeneinander drückenden Fingern einer Hand auszuüben, um den konkav einwärts gewölbten Verschlußdeckel unter Überwindung seiner Übertotpunkt-Charakteristik wieder in seinen konvex gewölbten Verschlußzustand zu bringen. In diesen Zustand schwenken wiederum die Haltearme über die Wulste des Getränkeglases und die Arretieransätze legen sich kraftschlüssig an der Unterseite der Wulste an.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einem Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert einen Schnitt durch die Oberseite eines Getränkeglases mit einem Verschlußdeckel im Schließzustand
- Figur 2:: Die gleiche Situation wie Figur 1 im Öffnungszustand
- Figur 3:: Seitenansicht des Verschlußdeckels in Richtung III in Figur 1

Ein Getränkeglas 1 sei mit einem kohlensäurehaltigen Getränk 2 gefüllt, welches in dem Luftraum 3 einen gewissen Überdruck erzeugt, der in Pfeilrichtung 9 auf einen in Schließstellung befindlichen Verschlußdeckel 10 wirkt.

Das Getränkeglas 1 weist einen oberen umlaufenden Rand 4 auf, der z. B. mit einem Dichtungsring belegt sein kann. Er kann auch völlig ohne Dichtung arbeiten, wobei es nur wesentlich ist, daß eine umlaufende Dichtfläche 8 gebildet wird und die Dichtwirkung mit dem darüberliegenden Verschlußdeckel 10 im Dichtbereich 15 zwischen der Dichtfläche 8 und der Unterseite des Verschlußdeckels 10 erreicht wird.

Am Außenumfang des Getränkeglases 1 ist hierbei ein umlaufender Wulst 5 angeordnet, der eine obere Schräge 6 aufweist und eine unter Auflagefläche 7, die auch hinterschnitten ausgebildet sein kann.

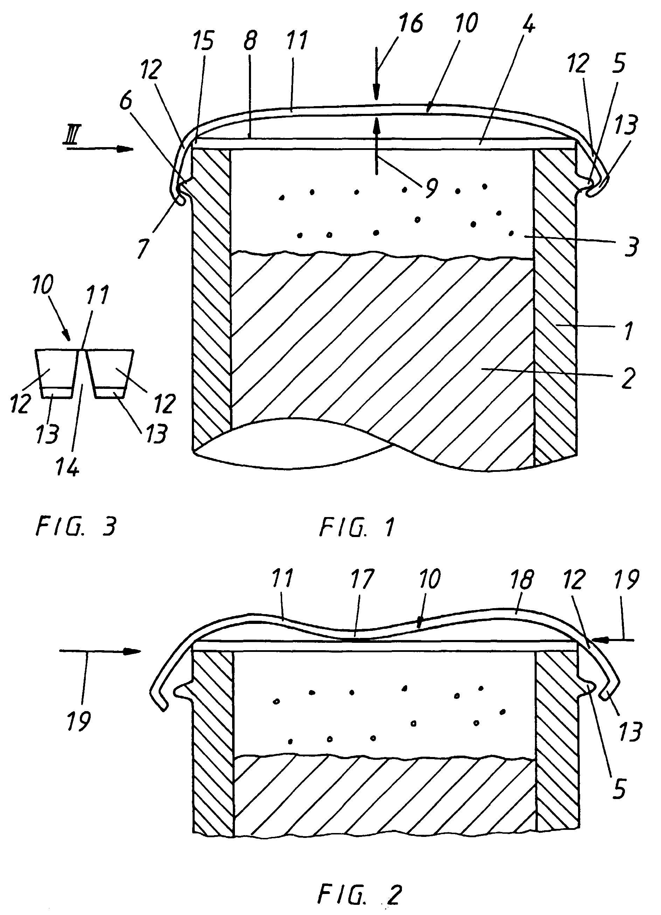

Der Verschlußdeckel 10 besteht im wesentlichen aus einem rundzylindrischen Teil, welcher genau der Formgebung des Getränkeglases 1 angepaßt ist. Er weist eine Deckeloberseite 11 auf, die sich in seitliche Haltearme 12 fortsetzt. Die Haltearme 12 sind gemäß Figur 3 im gleichmäßig Abstand parallel zueinander am Umfang des Deckeloberteils verteilt angeordnet und sind jeweils durch einen Schlitz 14 voneinander getrennt, der sich von der Deckeloberseite nach außen hin verlaufend konisch erweitert.

Jeder Haltearm 12 besteht aus einem relativ geraden Teil, welcher sich in einen nach unten abgewinkelten Arretieransatz 13 übergeht.

Der jeweilige Arretieransatz 13 legt sich kraftschlüssig an der Auflagefläche 7 des Wulstes 5 an und ist gegen abrutschen von dieser Auflagefläche 7 gesichert. Wie vorhin erwähnt kann die Auflagefläche 7 auch hinterschnitten sein, um ein Abrutschen des Arretieransatzes 13 an dieser Auflagefläche 7 zu vermeiden.

Zur Öffnung des Verschlußdeckels 10 wird eine Kraftentfaltung 16 auf die Deckeloberseite 11 aufgebracht. Der Verschlußdeckel 10 geht dann unter Überwindung seines Übertotpunktes in seine stabile 2 Lage gemäß Figur 2 über. Hierbei wölbt sich die Deckeloberseite 11 mit einer konkaven Wölbung 17 nach innen, während sich eine radial außenliegende konvexe Wölbung 18 ergibt. Bedingt durch die konkave Wölbung 17 nach innen, werden damit die Haltearme 12 hebelartig über den Dichtbereich 15 des Glases empor gehoben und gelangen in ihre angehobene Stellung, so wie dies in Figur 2 dargestellt ist. Es kommen damit die Arretieransätze 13 außer Eingriff mit den Auflageflächen 7 des Wulstes 5 und heben von diesem ab.

Soll der in Öffnungsstellung der sich befindliche Verschlußdeckel 10 wieder geschlossen werden, dann reicht es aus, in den einander gesetzten Pfeilrichtungen 19 einen entsprechenden Druck auf die Haltearme 12 aufzubringen, so daß die Wölbung 17 unter Überwindung der Federkraft des Deckels nach oben springt und in die konvex gewölbte Wölbung nach Figur 1 übergeht, wobei sich gleichzeitig die Haltearme nach unten verschwenken und sich die Arretieransätze kraftschlüssig an der Unterseite der Wulste 5 anlegen.

Mit der gegebenen technischen Lehre besteht also der Vorteil, daß man nun beliebige, kohlensäurehaltige Behälter mit einem wiederverschließbaren Verschlußdeckel versehen kann und daß es nun erstmals möglich ist, derartige Getränkegläser sofort mit dem kohlensäurehaltigen Getränk zu befüllen und an den Ort des Verbrauches zu bringen, wo das Glas sofort bestimmungsgemäß verwendet werden kann. Es bedarf also keiner Verwendung mehr von Flaschen, die geöffnet und deren Inhalt in ein Getränkeglas gebracht werden muß, weil das Getränkeglas selbst mit dem wiederverschließbaren Verschlußdeckel der Transportbehälter des Erfrischungsgetränkes und gleichzeitig auch das Getränkeglas selbst ist.

### Zeichnungslegende

- 1: Getränkeglas
- 2: Getränk
- 3: Luftraum
- 4: Rand
- 5: Wulst
- 6: Schräge
- 7: Auflagefläche
- 8: Dichtfläche
- 9: Pfeilrichtung
- 10: Verschlußdeckel
- 11: Deckeloberseite
- 12: Halterarm
- 13: Arretieransatz
- 14: Schlitz
- 15: Dichtbereich
- 16: Pfeilrichtung
- 17: Wölbung
- 18: Wölbung
- 19: Pfeilrichtung

## Patentansprüche

1. Wiederverschließbarer Verschlußdeckel insbesondere für ein Getränkeglas , **dadurch gekennzeichnet, daß** der Verschlußdeckel als Spring- oder Federdeckel mit Übertotpunkt-Charakteristik ausgebildet ist.

2. Verschlußdeckel nach Anspruch 1, **dadurch gekennzeichnet, daß** der Deckel mindestens in seinem mittleren Deckelbereich (Wölbung 17) eine Federungscharakteristik aufweist, und daß an dem Deckel Haltearme (12) angeordnet sind, an deren äußeren freien Enden jeweils Arretieransätze (13) angeordnet sind,.die einen Wulst (5) am Getränkeglas (1) untergreifen und sich an diesem kraftschlüssig anlegen.

3. Verschlußdeckel nach Anspruch 1 oder 2, **dadurch gekennzeichnet, daß** die Haltearme (12) gleichmäßig verteilt am Umfang des Deckels angeordnet sind.

4. Verschlußdeckel nach einem der Ansprüche 1 bis 3, **dadurch gekennzeichnet, daß** der den Arrieransätzen (13) des Deckels zugeordnete Wulst (5) am Getränkeglas (1) eine obere Schräge 6 und eine unter Auflagefläche 7 aufweist, die hinterschnitten ist.

5. Verschlußdeckel nach einem der Ansprüche 1 bis 4, **dadurch gekennzeichnet, daß** Verschlußdeckel (10) aus einem rundzylindrischen Teil besteht, welcher der Formgebung des Getränkeglases (1) angepaßt ist, daß er eine Deckeloberseite (11) aufweist, die sich in seitliche Haltearme (12) fortsetzt, die im gleichmäßigen Abstand parallel zueinander am Umfang des Deckeloberteils verteilt angeordnet sind und durch jeweils einen Schlitz (14) voneinander getrennt sind, der sich von der Deckeloberseite nach außen hin konisch erweitert.

6. Verschlußdeckel nach einem der Ansprüche 1 bis 5, **dadurch gekennzeichnet, daß** jeder Haltearm (12) aus einem im wesentlichen geraden Teil besteht, welcher in den nach unten und radial einwärts abgewinkelten Arretieransatz 13 übergeht
